# EUROPEAN PATENT SPECIFICATION

(11) **EP 1 432 946 B1**
(45) Date of publication and mention of the grant of the patent: **14.11.2007**
(21) Application number: 02783524.8
(22) Date of filing: 23.09.2002
(51) Int. Cl.: F17C 5/00, F17C 13/02, F17C 13/04

(54) **ELECTRONICALLY CONTROLLED MULTI-VALVE, FOR LPG FUEL TANKS**
ELEKTRONISCH GESTEUERTES MULTI-VENTIL, FÜR LPG KRAFTSTOFFTANK
SYSTEME MULTISOUPAPES A COMMANDE ELECTRONIQUE POUR RESERVOIRS A CARBURANT GPL

(30) Priority: 01.10.2001 IT BS20010070
(43) Date of publication of application: 30.06.2004
(73) Proprietor: Emer S.r.l., 25060 Collebeato, Brescia (IT); Valtek S.R.L., 42100 Reggio Emilia (IT)
(72) Inventor: GOBBI, Francesco, I-25060 Collebeato (IT); STEVANI, Luigi, 41200 Reggio Emilia (IT)
(74) Representative: Sangiacomo, Fulvia
(86) International application number: PCT/IT2002/000606
(87) International publication number: WO 2003/029719

(56) References cited:
- EP-A- 0 519 794
- EP-A- 1 090 795
- DE-A- 3 904 824
- FR-A- 2 462 295
- FR-A- 2 816 033
- US-A- 5 623 907

## Description

### Field of invention

The present invention belongs to the field of plants for gas powered vehicles, and in particular concerns a multi-valve with level indicator for (Liquid Petroleum Gas) LPG fuel tanks in such plants.

### State of the Art.

The LPG fuel tanks in vehicle gas powered plants are usually equipped with a so-called multi-valve which controls the filling and the level of gas liquid in the tank and the flow of the gas from the tank to the engine to be fed in response to control signals from a solenoid valve.

A multi-valve applied to a LPG fuel tank in said plants consists essentially of a body with a liquid gas load passage into the tank through a filler and a liquid gas conduit from the tank for delivery to the user unit. The outlet conduit is opened and closed by a connected solenoid valve, and in each of the inlet and outlet passages there is a one-way check valve which opens only in the direction of the gas flow to the tank and from here to the user unit.

Usually, in a multi-valve there are one or two manual on-off valves at the inlet and outlet of the gas flow towards the user unit. The indication of the level of the liquid gas in the tank, which must signal loads at 20, 40, 60 and, at a maximum, 80% of the capacity of the tank, is normally carried out by means of a floating element.

In fact, the level indicator devices at present available and in use are all solely mechanical. The presence of electronics is limited only to the level indication on the outside of the tank, the rest is all mechanical. The reading of the different filling levels up to the maximum level of 80% is still performed by a float and a system of levers and gears subject however two frequent jamming besides lacking in precision. In fact, it is not rare to have fillings up to 90% and more with subsequent problems of safety and danger. In other words, up to now the use of electronic components inside the LPG tank has not been addressed, above all to control the filling level.

This state of the art is represented, for example, by documents US-A-5 623 907 and EP-A-1 090 795 wherein the measurement of the level in a fuel tank is effected through of a float means connected to detection means outside the fuel tank.

In fact, the document US-A-5 623 907 discloses the use of a fuel level sensor with an associated float and a float arm mounted to lower housing by a mounting bracket secured to said lower housing of a fuel pump assembly located in the fuel tank.

Also, the document EP-A-1 090 795 discloses a fuel tank filler module which includes a secondary interruption means coupled to a main mechanical type interruption means comprising a float or a valve (clapet).

### Object and summary of the Invention

An object of the present invention is to remedy such a deficiency and at the same time to provided and offer a multi-valve for LPG tanks with a electronic measuring and reading system of the liquid gas level in the tank, at least while it is being filled, in place of the traditional mechanical means.

The object is achieved with an improved multi-valve which is associated or integrated with an electronic level sensor connected and interacting with means of intercepting the gas flow into and out of the tank and governed by a controller unit.

The multi-valve with electronic level sensor proposed here is capable of performing the following operations, according to the requirements of the regulation ECE/ONU 67R 01:
- electronic control of supply of LPG to the tank up to 80% of the capacity of the latter
- electronic indication of the LPG level in the tank
- limitation of overpressure
- limitation of gas outlet flow
- automatic shut-off of fuel in outlet
- manual shut-off of fuel both in inlet and outlet
- mechanical control of one way flow along the supply line.

The improved multi-valve according to the invention has also been conceived to provide the following advantages:
- long lasting high precision and repeatability of 80% filling level of the tank,
- high precision in indicating the level,
- high safety in cases of danger following accidents and breakouts of fire,
- ease of maintenance operations.

### Brief Description of Drawings

More details of the invention will become evident from the following description made with reference to the enclosed indicative and not restrictive drawings, in which:
Fig. 1 shows a cross-section of a tank complete with solenoid valve and electronic level probe; and
Fig.2 shows an electric and pneumatic diagram of the multi-valve.

### Detailed Description of the Invention

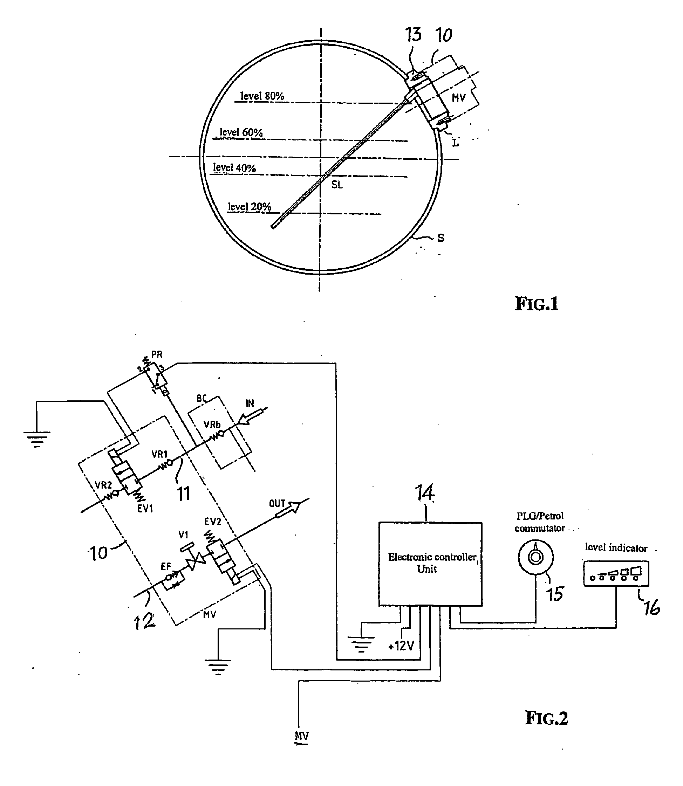

In Fig. 1 a tank S for LPG is represented to which a multi-valve MV is applied integrated with a device L for reading the liquid gas level in the same tank.

The multi-valve MV has a body 10 which is equipped, as is well known, with an inlet conduit 11 which is connected, at one end, to a filler BC for receiving the gas fuel, according to arrow IN, and flowing, at the other end, into the tank S, and a gas outlet conduit 12 which leads to the user unit indicated by the arrow OUT in Fig. 2.

A check valve VRb is provided at the level of the supply filler BC. Along the inlet conduit 11 two check valves have been inserted VR1 and VR2, one upstream and the other downstream of the EV1 inlet solenoid valve. A pressure sensor PR is also placed along the inlet conduit 11 downstream of the filler BC and before the check valve VR1.

A flow limiting device EF, a manual on-off valve V1 and an outlet solenoid valve EV2 are inserted in the outlet conduit 12.

The level reading device L is made up of an electronic level probe SL extending into the tank and connected to an electronic reading circuit which can be housed in a supporting element 13 and be physically joined to the body 10 of the multi-valve MV. The level probe SL can be the type using liquid sensors , thermistors, or capacitive, resistive or similar component types to read the tank filling levels at 20%, 40%, 60% and 80% of its capacity.

The level probe, the inlet and outlet solenoid valves and the pressure sensor are electrically connected to an electronic controller unit 14 which also governs a PLG/petrol change-over switch 15 and a level indicator 16 with visual level warnings of the filling levels of the tank indicated by the probe.

During normal operating of the multi-valve for deliver of gas to the engine to be powered, the inlet solenoid valve EV1 remains closed, whereas the outlet solenoid valve EV2 opens in response to a gas delivery signal to the user unit. With engine off, the outlet solenoid valve EV2 is and remains closed.

At the moment of filling the tank with LPG through the filler BC, the pressure sensor PR reads the pressure of the gas at the filler point and then controls the opening of the inlet solenoid valve EV1, the outlet solenoid valve EV2 being closed as the engine is not running. In this way LPG can be introduced into the tank where the electronic probe SL reads the gradual increase in level. As soon as the level of LPG in the tank reaches 80%, the probe sends a signal to the inlet solenoid valve EV1 through the controller unit to close, stopping the gas liquid from entering. On starting the engine, the outlet solenoid valve EV2 will operate regularly controlling the flow of gas to the user unit, whereas the level indicator will show the level of LPG read by the electronic probe SL in the tank.

It should also be pointed out that the multi-valve can also be equipped with safety devices such as for example, an excess pressure valve, calibrated at 27 Bar, and a thermal fuse calibrated at 120+/- 10°C.

## Claims

1. Multi-valve for LPG tanks for gas powered automobile engine plants, where the multi-valve has a body comprising an inlet conduit (11) connected at one end to a liquid gas filler point (BC) and the other entering the tank, an outlet conduit (12) for the gas to flow towards the user unit and devices along said inlet and outlet conduits to control the liquid gas flow to and from the tank, **characterised in that**:
- an electronic level probe (SL) is connected to and interacting with the inlet and outlet gas flow interception devices from and to the tank governed by a controller unit;
- said electronic level probe (SL) extends into the tank and is associated to a respective reading electronic circuit positioned on a supporting element mechanically fixed to the body of the multi-valve;
- along the inlet conduit (11) a first and second two one-way valves (VR1, VR2) are provided respectively upstream and downstream of a inlet solenoid valve (EV1),
- a pressure sensor (PR) is located downstream of the filler point (BC) upstream of said first one-way valve (VR1), and
- along the outlet conduit (12) there are inserted a flow check (EF), a manual on-off valve (V1) and an outlet solenoid valve (EV2).

2. Multi-valve according to claim 1, wherein said electronic level probe (SL) is a liquid sensors type, thermistors, or capacitive, resistive or similar component types, connected with an electronic reading circuit and provided to read tank fillings at 20, 40, 60 and 80% of its capacity.

3. Multi-valve according to claim 1, wherein the level probe, the inlet and outlet solenoids valves and the pressure sensor are electrically connected to an electronic controller unit (14) which also governs a PLG/petrol change-over switch (15) and a level indicator (16) with visual level warnings of the filling levels of the tank indicated by the probe, so that the pressure sensor, when liquid gas is being filled, takes the gas pressure at the filler point enabling the opening of the inlet solenoid valve (EV1) for filling, and the electronic probe (SL) takes the progressive LPG level in the tank, the outlet solenoid valve (EV2) being closed, and as soon as the LPG level in the tank reaches 80%, the electronic probe sends the inlet solenoid valve (EV1) a signal to close through the controller unit.

## Patentansprüche

1. Multiventil für LPG - Tanks von Anlagen für Motoren für gasbetriebene Fahrzeuge; am Ventilkörper befindet sich eine Zugangsleitung (11), die am einen Ende mit einem Stutzen (BC) für die Zufuhr von Flüssiggas verbunden ist und die am anderen Ende in den Tank mündet, des weiteren eine Leitung für den Austritt des Gases in Richtung der Versorgungseinheit (12), sowie. Einrichtungen entlang der genannten Zugangs- und Austrittsleitungen zur Kontrolle des Flüssiggasflusses zum Tank hin und von ihm weg. Das Multiventil zeichnet sich **dadurch gekennzeichnet dass**:
- eine elektronische Pegelsonde (SL) mit den Einrichtungen zur Regulierung des ein- und austretenden Gasflusses am Tank verbunden ist und mit diesen interagiert und die Pegelsonde über eine Steuerungseinheit bedient wird;
- die genannte Sonde (SL) sich im Tankinneren erstreckt und mit einem entsprechenden Leseschaltkreis verbunden ist, der auf einem mechanisch mit dem Ventilkörper verbundenen Unterstützungselement angebracht ist;
- entlang der Zugangsleitung (11) 2 Rückschlagventile (VR1, VR2) vorgesehen sind, einem elektrischen Einlassventil jeweils vor- und nachgeschaltet (EV1);
- ein Druckfühler (PR) dem Stutzen für die Gaszufuhr (BC) vorgelagert, und dem genannten ersten Rückschlagventil (VR1) nachgeschaltet ist; und
- entlang der Austrittsleitung (12) sich ein Strömungsbegrenzer (EF), ein von Hand bedienbarer Hahn (V1) sowie ein elektrisches Auslassventil (EV2) befinden.

2. Multiventil nach Anspruch 1, bei dem die erwähnte elektronische Pegelsonde (SL) entweder ein Flüssigkeitssensor, ein Heißleiter, eine kapazitive, resistive oder eine vergleichbare Komponente ist, die mit dem elektronischen Leseschaltkreis verbunden und dafür vorgesehen ist, Tankfüllungen mit einem jeweiligen Befiillungsniveau von 20%, 40%, 60% und 80% zu ermitteln.

3. Multiventil nach Anspruch 1, bei dem die Pegelsonde, die elektrischen Einlass- und Auslassventile sowie der Druckfühler elektrisch mit einer elektronischen Steuerungseinheit (14) verbunden sind, die auch einen LPG / Benzinumwandler (15) ansteuert sowie einen Niveauanzeiger mit Sichtmeldern (16), der den von der Sonde ermittelten Stand der Tankfüllung angibt, in der Weise, dass der Druckfühler im Moment der Flüssiggaszufuhr den Gasdruck am Stutzen misst, der die Öffnung des Einlassventils (EV1) für die Zufuhr freigibt, und die elektronische Sonde (SL) die Flüssiggasniveauveränderungen bei geschlossenem Auslassventil im Tank misst, und dass, sobald der Flüssiggasstand im Tank 80% erreicht hat, die elektronische Sonde über die Steuerungseinheit ein Signal zum Schließen des Einlassventils (EV1) sendet.

## Revendications

1. Multisoupapes pour réservoirs d'installations de GPL pour moteurs de véhicules à gaz, où la multisoupapes a un corps qui comprend un conduit d'entrée (11) liée par une extrémité à une goulotte (BC) de remplissage de gaz liquide et par l'autre extrémité au réservoir, un conduit de sortie (12) du gaz vers l'unité d'utilisation, et des éléments le long des conduits d'entrée et de sortie pour contrôler le flux du gaz liquide allant et venant du réservoir, **caractérisée par**:
- une sonde de niveau électronique (SL) est connectée et interagie avec les éléments d'interception du flux de gaz en entrée et en sortie du réservoir et est dirigée à travers une unité de contrôle;
- cette sonde de niveau électronique (SL) s'étend à l'intérieur du réservoir et est associée à un circuit électronique de lecture respectif positionné sur un élément de support joint mécaniquement au corps de l'électrovalve ;
- le long du conduit d'entrée (11) deux valves de non-retour sont prévues (VR1, VR2), respectivement en amont et aval d'une électrovalve d'entrée (EV1);
- un senseur de pression (PR) est mis en aval de la goulotte de remplissage (BC) et en amont de la première valve de non-retour (VR1); et
- le long du conduit de sortie (12) sont introduits un limitateur de flux (EF), un robinet de sectionnement manuel (V1) et une électrovalve de sortie (EV2).

2. Multisoupapes selon la revendication 1, dans laquelle la sonde de niveau électronique (SL) est du type à senseurs de liquide, thermostats, composants de capacité, résistants ou similaires, connectée avec le circuit électronique de lecture et prévue pour relever les remplissages du réservoir à 20%, 40%, 60% et 80% de sa capacité.

3. Multisoupapes selon la revendication 1, dans laquelle la sonde de niveau, les électrovalves d'entrée et de sortie et le senseur de pression sont connectés électriquement à une unité électronique de contrôle (14) qui gère aussi un commutateur GPL/essence (15) et un indicateur de niveau (16) avec des signalateurs optiques des mesures de remplissage du réservoir relevées par la sonde, de façon à ce que le senseur de pression, quand le gaz liquide est chargé, relève la pression du gaz à la goulotte permettant l'ouverture de l'électrovalve d'entrée (EV1) pour le chargement, et la sonde électronique (SL) relève l'augmentation du niveau de GPL dans le réservoir, l'électrovalve de sortie (EV2) étant fermée, et qui, dès que le niveau de GPL dans le réservoir atteint 80%, la sonde électronique envoie à travers l'unité de contrôle un signal de fermeture de l'électrovalve d'entrée (EV1).
